(19) Europäisches Patentamt
European Patent Office
Office européen des brevets

(11) Publication number: **0 158 393 A1**

# (12) EUROPEAN PATENT APPLICATION

(21) Application number: 85200437.3

(22) Date of filing: 21.03.85

(51) Int. Cl.[4]: C 08 G 18/80
C 08 G 69/18

(30) Priority: 22.03.84 US 592083

(43) Date of publication of application: 16.10.85 Bulletin 85/42

(84) Designated Contracting States: BE CH DE FR GB IT LI NL

(71) Applicant: STAMICARBON B.V.
LICENSING SUBSIDIARY OF DSM Postbus 53
NL-6160 AB Geleen(NL)

(72) Inventor: Ashida, Kaneyoshi
23560 East Newell Circle
Farmington Hills Michigan 48024(US)

(72) Inventor: van der Loos, Jozef Lambertus Maria
Rijksweg Zuid 146
NL 6134 AE Sittard(NL)

(72) Inventor: Frisch, Kurt Charles
17986 Park Lane
Grosse Ile Michigan 48138(US)

(74) Representative: van Leeuwen, Hendrik Bernardus et al,
Octrooibureau DSM Postbus 9
NL-6160 MA Geleen(NL)

## (54) Process for preparing an N-substituted carbamoyl-lactam compound.

(57) The invention concerns a process for preparing an N-substituted carbamoyl-lactam compound having the formula

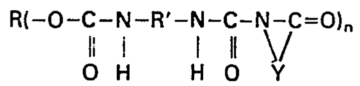

by reactively admixing a polyhydroxy compound having the formula $R(OH)_n$ and a polyisocyanate having the formula OCN−R'−NCO, wherein said n is an integer ≥ 3,

R is the residual of a three or higher functional polyhydroxy compound,

R' is an alkyl, aryl, alkaryl, or an aralkyl group having 6-25 carbon atoms, and Y is a $C_3$-$C_{14}$ alkylene group and reacting the product thereof with at least one lactam.

The product prepared accordingly can advantageously be used in the preparation of nylonblockcopolymers, and more in particular in the reaction injection moulding of nylon.

EP 0 158 393 A1

# PROCESS FOR PREPARING AN N-SUBSTITUTED CARBAMOYL-LACTAM COMPOUND

The present invention relates to a process for preparing an N-substituted carbamoyl-lactam.

In the anionic polymerization of a lactam, especially caprolactam, an anionic polymerization catalyst and an activator (or promoter) are typically present. In the art various kinds of activators are diclosed.

One proposal for an activated anionic catalytic polymerization process is described in U.S. Patent 3,304,291. The activator used therein consists of an organic compound having at least a 2 to 12 carbon radical being an N-substituted compound of at least one urea, thiourea or guanidine radical.

An improvement thereon for producing polylactams having a higher notch impact strength includes conducting the activated anionic catalyzed lactam polymerization process in the presence of a quantity of a polyether soluble in the molten lactam or the mixture of lactams being polymerized. The polyether is limited to at most about 25 % by weight of the quantity of the lactam to be polymerized, otherwise the resultant polylactams possess poor mechanical properties.

An isocyanate promoter having at least one isocyanate compound is used in an anionic catalytic polymerization of lactam conducted in the presence of a polyether soluble in molten lactam. As further described in U.S. Patent 3,704,280, it is required that the absolute number of hydroxyl (OH) groups contained in the polyether used is greater than the absolute number of isocyanate groups contained in the isocyanate employed.

Another improved process for the anionic catalytic polymerization of lactams aided by one or more promoters described in U.S. Patent No. 3,770,689 includes adding to the reaction mixture one or

more polyether compounds having etherified hydroxyl groups which are soluble in the molten lactam or lactam mixture. Conventional promoters suitable for use therein include polymer chains permanently terminated on at least one end by a promoter function. Generally the promoter functional groups or substituents are similar to monomeric promoters such as acid-chloride groups, N-carbonyl-sulfonamide groups, N-carbonyl-urea groups and acid-anhydride groups.

U.S. Patent No. 3987033 describes a composition prepared by reacting an aromatic diisocyanate with a triprimary alcohol and subsequently reacting this product with a mixture of a hydroxy component such as a phenol.

U.S. Patent No. 4171305 describes pure cyrstals of ε-caprolactam diblocked ω,ω'-diisocynato-1,3-dimethylbenzene used as a hardener of powder coating composition.

U.S. Patent No. 4211699 describes isocyanate adduct diols derived from an amino diol or a hydrazine diol and an organic diisocyanate and their use for the production of self-crosslinkable and/or self-crosslincked polyurethanes.

U.S. Patent No. 3,018,273 describes a process for in situ polymerizing caprolactam in the presence of an organomagnesium initiator compound, wherein an N,N diacyl compound is used as a promoter. Preferably, the N,N diacyl compounds are N-substituted imides, cyclic imides of dicarboxylic acids, having molecular weights not exceeding 1000 and more preferably still not exceeding 500 in order to preclude the presence of large inert groups in the promoters.

British patent No. 1,067,153 describes a process for preparing nylon-block-copolymers by anionically polymerizing caprolactam in the presence of an isocyanate terminated polypropylene glycol and a potassium based catalyst. In this process a nylon block copolymer containing at least one polyether block is formed.

In the U.S. patents Nos. 3,862,262, 4,031,164, 4,034,015 and 4,223,112 various aspects of the preparation of nylon block copolymers from caprolactam in the presence of an acyl lactam activator are described.

U.S. patents Nos. 4,031,164 and 4,223,112 describe lactam-

polyol-polyacyl-lactam block-terpolymers having a specified ratio of the various components. More particularly U.S. Patent No. 4,031,164 discloses the use of 18 to 90 % by weight of polyol blocks in the terpolymer.

U.S. Patent No. 3,862,262 describes lactam-polyol-acyl-polylactam block-terpolymers, and U.S. patent No. 4,034,015 is directed to lactam polyol-polyacyllactam or lactam-polyol-acyl-polylactam block terpolymers having at least about 5 % ester end group termination.

The Reissue patent 30,371 describes the preparation of polyester-polyamide compounds by condensation of an alcohol and acyl lactams in the presence of at least one of a metal or metal compound, the metal component thereof being selected from Group IA, IIA, IIB and IIIA of the Periodic Table.

The European patent applications Nos. 67693 and 67694, laid open to public inspection on 22.3.1982, describe specific lactam compounds based upon various kinds of hydroxy compounds, whereas the European patent applications Nos. 67694 and 67695 laid open to public inspection on 22.3.1982 describe the use of these lactam compounds in the preparation of nylon block copolymers.

Preparation of nylon compositions by anionic polymerization of at least 75 % lactam with up to about 25 % of an epoxy component in the presence of a basic catalyst and promoter are disclosed in U.S. Patent No. 4,400,490. The promoters are those typically used in the anhydrous polymerization of lactams.

In Sibal et al, Designing Nylon 6 polymerization systems, presented in part at the 2nd International Conference on Reactive Polymer Processing, Pittsburg Pa Nov. 1982, suggests in connection with the anhydrous anionic polymerization of caprolactam to prepare a cocatalyst or initiator by reacting at 80 °C isocyanate with dried caprolactam. Initially the caprolactam may be heated and about 20 % thereof boiled off with the dry residue portion being reacted with an isocyanate, the isocyanate being obtained by slowly reacting 1 mole polypropylene glycol (M.W. 2000) with 2 moles hexamethylene diisocyanate. However, this work is incomplete and it is clear that further

work is needed to determine reaction conditions, and other process-product characteristics/parameters as well as the processability of any polylactam produced using such an experimental activator.

The nylon block copolymers prepared when using an activator of this kind lack in thermal resistance, heat distortion temperature and solvent resistance. Furthermore, the so-called "heat sag" which is really a measure for the product to withstand heat treatment without being deformed, is not sufficient to withstand the temperatures in a curing oven for automobile paints. Finally, an improvement in the impact resistance (Charpy or Izod) of these products is required to make them suitable for application where impact resistance is required.

It is an object of the invention to provide a process for the preparation of an N-substituted carbamoyl type of activator for the anionic polymerization of lactam which activator gives a nylon block copolymer having improved thermal resistance, heat distortion temperature, solvent resistance, heat sag and impact resistance.

## DESCRIPTION OF THE INVENTION

The present invention relates to a process for preparing certain N-substituted carbamoyl-lactam compounds and may be described as reacting a lactam with an isocyanate compound and a polyhydroxy compound having hydroxyl group function of at least 3, more in particular between 3 and 10, respectively 3 and 6.

The process is important in connection with the preparation of compounds suitable for preparing nylon block copolymers acceptable in RIM nylon systems (reaction-injection-moulding).

Surprisingly, it has been found that in accordance with the present process the N-substituted-carbamoyl lactam compounds can be obtained in a reliable, reproducible, and easy manner. These compounds can be used as an activator for the preparation of nylon block-copolymers, in a combination with a lactam polymerization catalyst in which process they give improved nylon block copolymers.

This process produces N-substituted carbamoyl-lactam compounds having the following formula in case a difunctional isocyanate has been used:

```
R(-O-C-N-R'-N-C-N-C=O)n
     ‖ |    | ‖ \ /
     O H    H O  Y
```

In the above formula,

n is an integer > 3, advantageously 3-10, more in particular 3-6

R is the residual of a three or higher functional polyol,

R' is an alkyl, aryl, alkaryl, or an aralkyl group having 6 to 25 carbon atoms, and

Y is a $C_3$-$C_{14}$ alkylene group.

In the present invention, the isocyanate terminated component is the reaction product of a polyisocyanate and a polyol having a hydroxyl group functionality of at least 3, advantageously 3-10, more in particular 3-6.

Various polyisocyanates are suitable for use in the present process. Broadly speaking, such polyisocyanates having an isocyanate functionality of two and a number of carbon atoms of 6-25, include aliphatic, araliphatic, cycloaliphatic and aromatic isocyanates. Examples include 1,5 and 1,6 hexane-diisocyanate, isophoronediisocyanate (IPDI) and xylylene diisocyanate (XDI). Readily availably suitable di- and polyisocyanates include 2,4- and 2,6-toluene diisocyanate, 2,2'-, 2,4'-, and 4,4'-diphenylmethane diisocyanate (MDI or crude MDI). Other polyisocyanates include polyphenylene polymethylene polyisocyanates. Also suitable polyisocyanates include modified MDI, such as the carbodiimide modified MDI, and the hydrogenated aromatic diisocyantes such as hydrogenated TDI, XDI or MDI. These isocyanates may be employed singly or in mixed form.

Suitable polyols are triols or higher hydroxy functionality compounds. Preferably such compounds are selected from the group of polyether polyols, polyester polyols, and polybutadienepolyols, polycarbonate polyols, siloxane containing polyols and the so called "polymer" polyols. The "polymer" polyols as defined herein comprise

graft polymers obtained by grafting one or more ethylenically unsaturated monomers onto a polyether polyol as well as the polyurea dispersion in polyols (PUD).

These polyurea dispersions can be obtained by dissolving a diamine or hydrazin together with a diisocyanate in stoichiometric amounts in a polyol and reacting the dissolved compound to form a polyurea compound dispersed in the polyol.

The amount of graft of ethylenically unsaturated monomer in the polyol ranges from 10-35% by weight on the final grafted product. Examples of suitable grafting monomers are especially acrylonitrile or a mixture of styrene and acrylonitrile such as Niax 31-28 (product of Union Carbide Corporation).

Likewise the amount of polyurea dispersed in the polyol is from 10-35 % by weight of the total dispersion.

A major advantage of using there "polymeric" polyols is that the resulting product (nylon block copolymer) has a higher flexural modulus without decrease in impact resistance.

Other examples of polyols that can advantageously be used are the triols and tetrols of polyethylene oxide, polypropylene oxide, polyethersegments containing polyesters, polyaminepolyols and polylactones such as caprolactones. It is also possible to use a polyol that has been obtained by ethoxylating and/or propoxylating ethylene diamine, glucose, fructose, saccharose or trimethylolpropane.
As indicated above, the polyols are mainly polymeric polyols. The equivalent weight is advantageously 100-3000 more in particular between 1000 and 2500.

It is to be understood that any molecular weight, or equivalent weight, referred to herein are numerical average weights. Furthermore, the term equivalent weight of a polyol is understood to mean the numerical average weight of the polyol per hydroxyl group, i.e. the molecular weight divided by the functionality.

It is also quite possible to use low molecular weight polyols. Especially if the N-substituted carbamoyl compound is used in polyurethanes, such as coatings it can be advantageous to start from one or more low molecular weight polyols such as glycerol or trimethylolpropane.

Mixtures of two or more polyols can also be used.

In a preferred embodiment of the present invention an amount of diol is also present in the polyol component.
This diol can be added to the three or higher functional polyol prior to the reaction thereof with the polyisocyanate.
It is however also possible to prepare the activator or precursor thereof based upon the diol and three or higher functional polyol separately, and mix the various components at a suitable stage.

The ratio of added diol to three or higher functional polyol ranges from 2 to 60 eq.% based upon the amount of hydroxyl-groups.

It should be noted that the ranges apply to added diol, as in industrially prepared three or higher functional polyol always a minor amount of diol is present.
However this diol already present in the three or higher functional polyol should not be taken into account in determining these ranges.

Suitable diols for use in the present invention include the low molecular weight diols having a molecular weight of up to 350, such as ethylene glycol, 1,3 propylene glycol, 1,2 propane diol, 1,2 butane diol, 1,3 butane diol, 1,4 butane diol, 1,5 pentane diol, 1,10 decane diol, 1,1 dimethylol-3-cyclohexene, diethylene glycol, dipropylene glycol, 2(hydroxyethoxy)-1-propanol, glycerol or mixtures of two or more of these compounds.

Preferred are however the high molecular weight diols having an equivalent weight of 300 to 3000, more in particular between 1000 and 2500, as these diols exert a positive influence when the N-substituted carbamoyl-lactam compounds are used for the preparation of nylon block copolymers.

Suitable high molecular weight diols are the glycol-based polyether diols such as poly(ethylene oxide) glycol, poly(propylene oxide) glycol poly(tetramethylene oxide) glycol, random or block copolyethers of ethylene oxide and propylene oxide, polyesterdiols, polycarbonate diols etc.

Usually the reaction between the polyol and the polyisocyanate does not require the presence of a catalyst. In case an

aliphatic isocyanate is used a minor amount of catalyst may be used to accelerate the reaction somewhat. Conventional polyurethane catalysts are suitable and include, for instance, tertiary amines or carboxylic acid tin (II) and tin (IV) salts. When using an aromatic polyisocyanate a catalyst is not necessary.

Preferably no solvent is used in this reaction. Only if the viscosity of the isocyanate terminated polyurethane becomes too high for easy processing, some suitable solvent can be used such as ethoxyethyl acetate (cellosolve acetate). This solvent can be distilled off during or after the polyol-polyisocyanate reaction, or even after the reaction with lactam.

Various lactams are suitable for use in the present process. Generally, lactams having four to fourteen carbon-atom rings are suitable and lactams having from 5 to 11 carbon atom rings are preferred. Such lactams may have straight chain or branched chain alkyl substituents on the carbon chain that do not inhibit or adversely affect preparation of the activator of the subsequent use thereof. Examples of suitable lactams include, for instance, 2-pyrrolidone, 2-piperidone, lauryl lactam, caprolactam and the like. Alkyl substituted lactams include, for instance, 6-amino-5-methyl hexanoic acid lactam and 6-amino-3-methyl-hexanoic acid lactam. Preferably caprolactam is employed.

Other polyamide forming compounds are generally inappropriate. Dicarboxylic acids, for instance, disturb the anionic polymerization reaction. Moreover, it is theorized that use of amino compounds may result in the decomposition of the carbamoyl lactam to lactam and urea compounds. Water-forming compounds, such as by-product of the condensation of diacids with diamines, interfere with activator formation.

The ratio of the various reaction components depends mainly on their functionality. In general the ratio of NCO/OH groups is approximately 2. In reacting the isocyanate terminated polyurethane and the lactam, the ratio of NCO to lactam will be about 1.

The N-substituted carbamoyl compound can advantageously be used as an activator in the anionic polymerization of lactams, more

particularly, to yield a nylonblockcopolymer. This anionic polymerization requires the presence of an anionic polymerization catalyst, such as alkali metal lactamate, especially sodium or potassium lactamate, and Grignard lactamates, especially bromo magnesium lactamate. This catalyst can be used in an amount of 0.01-10 equivalent % with respect to the lactam, more in particular in an amount of from 0.1-3 equivalent % with respect to the lactam.

More in particular the compound prepared according to the invention can be used in Reaction-Injection-Molding of nylon, wherein polyamide-forming compounds are injected into a closed mold, where rapid polymerization occurs, resulting in a molded nylon product.

The amount of polyether with respect to the final nylon block copolymer, lies advantageously between 5 and 35 wt. %, more in particular between 10 and 30 wt. % with respect to the final product.

Within these ranges the combination of impact strength and flexural modulus of the nylon blockcopolymer is optimal.

The anionic polymerization of lactam is advantageously conducted at a temperature between the melting point of the lactam and the melting point of the resulting nylon block copolymer. More in particular the polymerization is conducted at a temperature between 90 and 160 °C.

The following non-limiting examples illustrate various aspects and embodiments of the present invention.

Example 1

Desmodur W, methylene bis(4-cyclohexylisocyanate), Mobay Chemical Corp., in an amount of 87.6 grams (0,668 equivalent) and Pluracol 380 (primary hydroxyl group-terminated polyether triol, OH equivalent weight: 2244, BASF Wyandotte Corp.), in an amount of 500 grams (0.223 equivalent) was charged in a reaction kettle, and the mixture was heated under stirring. The heating at 70 °C and stirring under nitrogen blanket was conducted for 6 hours and 40 min. to reach to the theoretical NCO percent (3.19 %). In this reaction, no catalyst was used.

Into the above reaction product, 50.4 g (0.445 mole) of

caprolactam was added. The mixture was stirred for 5 hours at 85 °C. The resultant product, i.e., caprolactam-urethane prepolymer adduct, was highly viscous at room temperature, but was liquid at 70 °C.

Example 2

Pluracol 380 (500 grams, 0.223 equivalent) was mixed with hexamethylene diisocyanate (HDI) (56.2 grams, 0.670 equivalent). The mixture was heated for 5 hours and 50 min. at 75 °C to reach to the theoretical NCO percent (3.37 %). Into the reaction product, 50.6 grams (0.447 mole) of caprolactam was added, and the mixture was heated for 5 hours at 85 °C.

The reaction product, i.e., caprolactam-urethane prepolymer adduct was highly viscous at room temperature, and was liquid at 75 °C.

The caprolactam adducts obtained according to Examples 1 and 2 were used to make block copolymers of nylon 6 in the presence of a sodium lactamate or potassium lactamate polymerization catalyst. The results obtained are shown in Tables I to IV.

TABLE I

Rate Study of (HDI + Pluracol 380) Adduct-CLM Copolymerization at 130 °C using Sodium Lactamate

| Product No. | Polyether wt.% | Carbamoyl groups eq % | Catalyst eq % | Cloud Point | Solidification Time |
|---|---|---|---|---|---|
| 1 | 51.5 | 14.4 | 6.2 | 1 min. 45 sec. | 2 min. 20 sec. |
| 2 | 34.2 | 5.6 | 4.3 | 1 min. 35 sec. | 2 min. 40 sec. |
| 3 | 20.6 | 2.8 | 3.4 | 2 min. 30 sec. | 4 min. 30 sec. |
| 4 | 13.7 | 1.6 | 3.1 | 6 min. | 11 min. |
| 5 | 10.3 | 1.2 | 3.0 | 16 min. | 20 min. |

TABLE II

Rate Study of (Des.W + Pluracol 380) Adduct-CLM Copolymerization using Sodium Lactamate at 130 °C

| Product No. | Polyether wt.% | Carbamoyl groups eq % | Catalyst eq % | Cloud Point | Solidification Time |
|---|---|---|---|---|---|
| 6 | 49.0 | 11.8 | 6.3 | 2 min. 40 sec. | 2 min. 50 sec. |
| 7 | 32.7 | 5.4 | 4.3 | 2 min. 15 sec. | 3 min. 10 sec. |
| 8 | 19.6 | 2.6 | 3.4 | 4 min. | 6 min. 15 sec. |
| 9 | 13.1 | 1.8 | 3.1 | 11 min. 20 sec. | 14 min. 30 sec. |

TABLE III

Rate Study of (Des.W + Pluracol-380) Adduct-CLM Copolymerization at 130 °C using Potassium Lactamate

| Product No. | Polyether wt.% | Carbamoyl groups eq % | Catalyst eq % | Cloud Point | Solidification Time |
|---|---|---|---|---|---|
| 10 | 49.0 | 12.6 | 22.6 | 1 min. 15 sec. | 2 min. 30 sec. |
| 11 | 32.7 | 5.6 | 15.2 | 1 min. 45 sec. | 2 min. 15 sec. |
| 12 | 19.6 | 2.6 | 12.0 | 3 min. | 3 min. 45 sec. |
| 13 | 13.1 | 1.6 | 10.9 | 3 min. 40 sec. | 4 min. 40 sec. |
| 24 | 20.0 | 2.8 | 2.0 | 3 min. 40 sec. | 4 min. 05 sec. |
| 25 | 20.0 | 2.8 | 3.1 | 2 min. 45 sec. | 3 min. 10 sec. |
| 26 | 20.0 | 2.8 | 4.2 | 3 min. 10 sec. | 3 min. 35 sec. |
| 27 | 20.0 | 2.9 | 6.4 | 3 min. 35 sec. | 4 min. 30 sec. |
| 28 | 20.0 | 3.0 | 8.8 | 3 min. 40 sec. | 4 min. 25 sec. |

TABLE IV

Rate Study of (HDI + Pluracol 380) Adduct-CLM Copolymerization at 130 °C using Potassium Lactamate

| Product No. | Polyether wt.% | Carbamoyl groups eq % | Catalyst eq % | Cloud Point | Solidification Time |
|---|---|---|---|---|---|
| 14 | 51.5 | 13.2 | 22.5 | 1 min. 20 sec. | 1 min. 30 sec. |
| 15 | 34.3 | 6.0 | 15.1 | 0 min. 50 sec. | 1 min. 15 sec. |
| 16 | 20.6 | 2.8 | 12.0 | 1 min. 30 sec. | 1 min. 50 sec. |
| 17 | 13.7 | 1.8 | 10.9 | 3 min. 30 sec. | 4 min. 15 sec. |
| 29 | 10.1 | 1.2 | 0.5 | 3 min. 25 sec. | 4 min. 0 sec. |
| 30 | 10.1 | 1.2 | 1.0 | 2 min. 35 sec. | 2 min. 55 sec. |
| 31 | 10.1 | 1,2 | 2.0 | 2 min. 30 sec. | 2 min. 55 sec. |
| 32 | 10.1 | 1.2 | 3.0 | 2 min. 20 sec. | 2 min. 40 sec. |
| 33 | 10.1 | 1.3 | 6.3 | 4 min. 35 sec. | 5 min. 10 sec. |
| 34 | 20.0 | 2.7 | 2.1 | 1 min. 50 sec. | 2 min. 25 sec. |
| 35 | 20.0 | 2.8 | 3.1 | 1 min. 30 sec. | 2 min. 05 sec. |
| 36 | 20.0 | 2.9 | 6.2 | 1 min. 30 sec. | 2 min. 20 sec. |
| 37 | 30.0 | 4.9 | 2.1 | 8 min. 45 sec. | 11 min. 05 sec. |
| 38 | 30.0 | 5.0 | 3.2 | 1 min. 15 sec. | 1 min. 35 sec. |
| 39 | 30.0 | 5.2 | 6.3 | 0 min. 50 sec. | 1 min. 20 sec. |
| 40 | 40.0 | 8.5 | 6.3 | 0 min. 35 sec. | 1 min. 10 sec. |

The results establish that a HDI-based adduct exhibited higher reactivity than Desmodur W based adduct in both solidification time and cloud point.

Tables V through VIII summarize certain physical properties of the nylon 6 block copolymers. For instance Table V shows mechanical strengths, Table VI shows Izod impact strengths, Table VII shows thermal stability in terms of TGA and Table VIII shows Shore D hardness before and after water absorption. Table IX shows mechanical properties at a molding temperature of 160°C.

Table X summarizes certain physical properties of the nylon 6 block copolymers obtained by using a mixture of diol- and triolcarbamoyl lactam compound. The diol used is polypropylene glycol with a molecular weight of approximately 4000 and the triol used is the afore mentioned Pluracol P-380. The isocyanate used is Desmodur W.

-13-

TABLE V

Mechanical Strengths of the Nylon 6 Block Copolymer

| Product No. | Polyether wt. % | Carbamoyl groups (eq %) | T.S.* kpsi/MPa | 100 % Modulus kpsi/MPa | % Elongation | T.S.* kpsi/MPa | 100 % Modulus kpsi/MPa | % Elongation | Tear Strength (pli)/(kN/m) |
|---|---|---|---|---|---|---|---|---|---|
| | Pluracol 380 + HDI | | | | | | | | |
| 18 | 44.1 | 9.4 | 1.6<br>11.0 | 0.8<br>5.7 | 321 | 1.5<br>10.3 | 1.0<br>7.2 | 433 | 585<br>102.0 |
| 19 | 29.4 | 4.6 | 1.5<br>10.3 | 1.4<br>9.9 | 120 | 1.3<br>8.6 | - | 76 | 459<br>80 |
| 20 | 14.8 | 2.0 | 5.3<br>36.8 | Brittle | 33 | 3.0<br>21.00 | - | 84 | 131<br>23 |
| | Pluracol 380 + Des.-W | | | | | | | | |
| 21 | 28.0 | 4.4 | 3.2<br>22.3 | Brittle | | 2.2<br>14.8 | - | 127 | 416<br>73 |

* Tensile Strength

Note: 1. The above samples were prepared using a Grignard catalyst; mold temperature 130 °C
2. Column 4, 5 and 6 before water absorption
3. Column 7, 8, 9 and 10 after water absorption.

TABLE VI

Izod Impact Strength of the Nylon 6 Block Copolymer

| Product | Sample # | Impact Strength in (ft-lb/in)/(J/m) | Average (ft-lb/in)/(J/m |
|---|---|---|---|
| | (HDI + Pluracol 380) | | |
| 19 | $B_1$ | 3.8/200 | |
| | $B_2$ | 3.1/167 | 3.5/189 |
| | $B_3$ | 3.7/200 | |
| | (Des.-W + Pluracol 380) | | |
| 21 | $C_1$ | 2.9/156 | |
| | $C_2$ | 3.1/167 | 2.8/148 |
| | $C_3$ | 2.3/122 | |

TABLE VII

Thermal Stability of the Nylon 6 Block Copolymer

| Product No. | Component | Temperature at 10 % wt. loss | Temperature at 50 % wt. loss |
|---|---|---|---|
| | (HDI + Pluracol 380) | | |
| 18 | | 185 °C | 370 °C |
| 19 | | 145 °C | 345 °C |
| 20 | | 130 °C | 325 °C |
| | (Des.-W + Pluracol 380) | | |
| 21 | | 180 °C | 340 °C |

TABLE VIII

Shore D Hardness

| Product No. | Polyether (wt. %) | Carbamoyl groups (eq %) | Before Water Absorption | After Water Absorption |
|---|---|---|---|---|
| | | *(HDI + Pluracol 380) | | |
| 18 | 44.1 | 9.4 | 36 | 36 |
| 19 | 29.4 | 4.6 | 43 | 43 |
| 20 | 14.8 | 2.0 | 70 | 68 |
| | | *(Des.-W + Pluracol 380) | | |
| 21 | 28.0 | 4.4 | 61 | 60 |
| | | **(Des.-W + Pluracol 380) | | |
| 22 | 13.1 | 1.6 | 64 | 55 |
| | | **(HDI + Pluracol 380) | | |
| 23 | 13.7 | 1.8 | 67 | 50 |

* Samples were prepared using lactam magnesium bromide

** Samples were prepared using K-Lactamate (mold temperature 130 °C).

## TABLE IX

### Mechanical properties at molding temperature 160 °C

| Product No. | Polyether (wt.%) | Carbamoyl groups (eq %) | Flexural Modulus (MPa) | Notched Izod Impact (J/m) | Tensile Strength (MPa) | % Elongation |
|---|---|---|---|---|---|---|
| | P 380 + Des W. | | | | | |
| 41 | 25 | 3.8 | 1160 | 644 | 35.3 | 198 |
| | P 380 + HDI | | | | | |
| 42 | 25 | 3.7 | 980 | 712 | 36.8 | 118 |

Note: Samples were prepared using lactam magnesium bromide.

## TABLE X

### Mechanical properties with diol and triol polyethers

| Product No. | Polyether diol (wt.%) | Polyether triol (wt.%) | Carbamoyl groups (eq %) | Flexural Modulus (MPa) | Notched Izod Impact (J/m) | Tensile Strength (MPa) | % Elongation |
|---|---|---|---|---|---|---|---|
| 43 | 5,3 | 19,7 | 3,5 | 1200 | 663 | 38,4 | 189 |
| 44 | 12,9 | 12,1 | 2,9 | 1200 | 616 | 39,1 | 229 |

Note: Samples were prepared using lactam magnesiumbromide as catalyst and 160 °C mold temperature.

WHAT IS CLAIMED:

1. Process for preparing an N-substituted carbamoyl-lactam compound having the formula

```
R(-O-C-N-R'-N-C-N-C=O)n
     " |    | " \ /
     O H    H O  Y
```

by reactively admixing a polyhydroxy compound having the formula $R(OH)_n$ and a polyisocyanate having the formula OCN-R'-NCO, wherein said n is an integer > 3

$R(OH)_2$ is a three or higher functional polyhydroxy compound,

R' is an alkyl, aryl, alkaryl, or an aralkyl group having 6-25 carbon atoms, and Y is a $C_3$-$C_{14}$ alkylene group and reacting the product thereof with at least one lactam.

2. Process according to claim 1, wherein said polyol is a polyether polyol, a polyester polyol, polybutadiene polyol, grafted polyether polyol or a polyurea dispersion.

3. Process according to claim 1, wherein said polyisocyanate is a diisocyanate.

4. Process according to claim 3, wherein said diisocyanate is 1,6 hexane diisocyanate, isophoron diisocyanate, TDI or MDI.

5. Process according to claim 4, wherein said diisocyanate is 1,6-hexane diisocyanate.

6. Process according to claim 1, wherein said lactam is caprolactam.

7. Process according to claim 1, wherein n is an integer having a value of 3-10, more in particular 3-6.

8. Process according to claim 1, wherein the polyhydroxy compound comprises an amount of an added difunctional hydroxy compound of 2-60 eq.%.

9. N-substituted carbamoyl lactam compound obtained by the process according to claim 1.

10. Process for preparing a nylon block copolymer by polymerizing lactam in the presence of a lactam polymerization catalyst and an N-substituted carbamoyl lactam compound prepared according to claim 9.

European Patent Office

# EUROPEAN SEARCH REPORT

0158393

Application number

EP 85200437.3

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int Cl 4) |
| X<br>Y | DE - B2 - 2 131 299 (BAYER AG)<br>* Column 3, line 12 - column 5, line 23 *<br>-- | 1-9<br>10 | C 08 G 18/80<br>C 08 G 69/18 |
| X | DE - A1 - 3 004 876 (CHEMISCHE WERKE HULS AG)<br>* Claims 1-5; page 7, lines 9-18; page 8, lines 6-18 *<br>-- | 1-4,6,7,9 | |
| Y | DE - A1 - 2 647 309 (BAYER AG)<br>* Claims *<br>---- | 10 | |
| | | | TECHNICAL FIELDS SEARCHED (Int. Cl 4) |
| | | | C 08 G 18/00<br>C 08 G 69/00<br>C 07 D 207/00<br>C 07 D 211/00<br>C 07 D 223/00 |

The present search report has been drawn up for all claims

| Place of search | Date of completion of the search | Examiner |
|---|---|---|
| VIENNA | 17-06-1985 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document